# EUROPEAN PATENT SPECIFICATION

(11) **EP 1 701 424 B1**
(45) Date of publication and mention of the grant of the patent: **29.06.2011**
(21) Application number: 05381013.1
(22) Date of filing: 08.03.2005
(51) Int. Cl.: H02H 9/04, H02H 3/06

(54) **Combined device of electric protection at low voltage against transient and extended over-voltage with automatic reconnection**
Kombinierte elektrische Niederspannungsschutzvorrichtung gegen transiente und länger anhaltende Überspannungen, mit automatischer Wiederverbindung.
Dispositif combiné de protection electrique a baisse tension contre les sur-tensions transitoires et etendue avec reconnexion automatique

(43) Date of publication of application: 13.09.2006
(73) Proprietor: Cirprotec, S.L., 08223 Terrassa (ES)
(72) Inventor: Pons Gonzales, Carles, 08223, Terrassa (ES); Martin Peiro, Jose Antonio, 08223, Terrassa (ES)
(74) Representative: Esteban Perez-Serrano, Maria Isabel

(56) References cited:
- US-A- 3 987 393
- US-A- 4 707 760
- US-A- 5 510 949
- US-A- 5 859 756
- US-B1- 6 816 350

## Description

### OBJECT OF THE INVENTION

An object of the present invention is a combined device of electric protection at low voltage against transient and extended over-voltages with automatic reconnection, for installation in the individual supply point.

The present invention is characterized in that it combines in a single device a circuit for protection against transient over-voltages, as well as a circuit for protection against extended over-voltages. This device works in combination with a remote control unit, which controls the disconnection of a cut-out element when a surge is present in the supply voltage during a certain time, producing moreover the reconnection of the cut-out element on when the supply voltage falls to its normal values.

The present invention is likewise characterized in that when the over-voltage is of an extended character the device can have some means that modify the time elapsing until tripping as a function of the surge voltage level.

The present invention is characterized in that the control signals sent from the combined protection device to the remote control unit and from this to the cut-out unit, adopt values which produce the disconnection or the reconnection of the cut-out device if the supply voltage surpasses a voltage threshold or if the supply voltage diminishes to the habitual values respectively.

The invention is likewise characterized in that the device has a power supply which delivers two stabilized voltages, one of them is doubly stabilized and has a low thermal drift, said voltage being used on one hand to obtain two very stable reference voltages, and on the other to serve as supply for the electronics of the circuit, since it is doubly stabilized it provides the electronics of the unit with a very stable operation over broad ranges of input voltage and temperature.

Another characteristic which the protection device has is high stability in the event of slow disturbances in the supply voltage which can cause repeated connections and disconnections in short intervals of time, which could damage the installation or the loads connected to them. This stability is achieved by fitting the device with a timeout for disconnection and reconnection, and also the comparator circuits include hysteresis.

Thus, the present invention lies within the ambit of the devices which in association with control and protection devices such as magnetothermal and differential circuit breakers, allow protection to be achieved against transient and extended over-voltages.

### BACKGROUND OF THE INVENTION

Up to now devices have been available on the market which provide protection on one hand against transient over-voltages and on the other against extended over-voltages.

In no case is the existence of devices known which combine in a single item of equipment the combined protection against extended and against transient over-voltages. This combined arrangement signifies a saving of space in its assembly in the control and protection panels of dwelling houses, where space in general is very limited.

The space problem in the control and protection panels in which the cut-out elements employed are electromechanical relays, solid state relays or contactors, is augmented since they have to complete the protection of the installation with a second cut-out element, magnetothermal or differential breaker, which guarantees the safety of the installation. Hence in these facilities the space saving feature is appreciated that is signified by the combined arrangement of protection against extended and against transient over-voltages.

Another drawback found in the devices existing on the market is the absence of a stabilized supply means with low thermal drift for the reference voltage, it being possible to have substantial thermal drifts, which will signify variations in the values of input voltage for connection or disconnection.

Although protection devices exist against extended over-voltages which produce tripping after a voltage threshold has been exceeded for a certain time, these devices lack on one hand means of protection against transient over-voltages, as well as means for automatic resetting when the extended over-voltage has recovered its normal value.

Also in the devices which have a timeout against fluctuations in the supply voltage, situations can arise wherein, after said timeout has elapsed, repeated connections and disconnections are produced in short intervals of time, whereby it is convenient to avoid said repeated connections by including hysteresis or memory in the system.

It has been observed on the other hand that some of the existing protection devices produce tripping by means of a single pulse acting on a triac, a MOSFET, or on a relay. This on occasions is a source of error, either through inopportune tripping for noise signals, or for the pulse having been insufficient to produce the disconnection.

Protection devices are known which generate a train of pulses to assure the disconnection, although they have no means to allow the reconnection of the cut-out device when the over-voltage which originated the tripping has disappeared.

it is known from the stat of the art an automatic power line monitor and controller system as the one disclosed in US 5858756, wherein the device is used for monitoring the electrical voltage supplied to an electrical system or appliance by monitoring the supplied electrical voltage and preventing the supplied electrical voltage form reaching the electrical system or appliance when the supplier electrical voltages is not within a predetermined range and for automatically restoring the supplied electrical voltage to the electrical system or appliance when the supplied electrical voltage is within the predetermined range.

This system has some disadvantages which the present application overcomes.

Therefore one of the objectives of the invention is to achieve a protection device with high immunity to the interference present in the mains, so that in the event of this happening, it would reconnect the cut-out element when the interference has vanished, and also in the opposite sense, the device would be capable of being disconnected again if it were reconnected when the input voltage is too high.

Therefore it is an object of the present invention to develop a combined device of electric protection at low voltage against transient and extended over-voltages which overcomes the aforesaid drawbacks and therefore achieves:
- A reduction of the space necessary in the switchboards by incorporating in a combined manner the combined protection against transient and extended over-voltages.
- That the protection device against extended over-voltages acts after a time has elapsed and a voltage threshold surpassed, it being possible to have some means which modify the time lapse until tripping as a function of the level of over-voltage, as well as having means which avoid repeated connections and disconnections in short intervals of time in the event of slow fluctuations in the supply voltage.
- A device with high immunity to interference in the mains, and in the event of fortuitous tripping of the cut-out element taking place, a reconnection of the same when the interference has vanished, as well as producing the disconnection of the cut-out element if the reconnection was carried out improperly, since the input voltage continues being too high in spite of the interference.
- A device which is able to reconnect the cut-out element when the over-voltage which originated the opening of the same has disappeared.
- Having a power supply which provides:
   o A doubly stabilized voltage
   o A stabilized voltage
   o A voltage proportional to the input voltage.

These objects are achieved by a protection device according to claim 1.

### DESCRIPTION OF THE INVENTION

The object of the present invention of combined protection device seeks to combine in a single device the protection against transient over-voltages and against extended over-voltages at the individual point of supply.

Transient over-voltages are voltages of a very high value and of very short duration (microseconds or milliseconds), resulting generally from lightning, interference or switching taking place in the electric grid.

On the other hand extended over-voltages are voltages which exceed the mains voltage in a value of at least 10% of the mains voltage, for a time that extends from a few seconds to several hours, produced generally by the breakage of cables (line neutral), incorrect performance of grid operations or variations in the load on the lines.

The device of combined protection object of the invention is associated with a remote control unit which serves to disconnect the cut-out element when an extended over-voltage is present in the supply voltage, and also to produce the reconnection of the cut-out element when the supply voltage returns to normal values.

The device protects against transient over-voltages by limiting the value to appropriate voltages so that the installation and the loads connected to them do not suffer damage.

Moreover the device protects against extended over-voltages when the supply voltage surpasses a threshold value for a predetermined time.

The combined device of electric protection is connectable to the electricity supply mains using as cut-out means a magnetothermal switch or a differential switch, avoiding the use of two cut-out elements, one to provide protection against extended over-voltages and another to guarantee the safety of the installation.

The combined device has one part dedicated to protection against transient over-voltages and another part dedicated to protection against extended over-voltages.

The protection against transient over-voltages is implemented in each of the live phases by means of one or more metallic oxide varistors in association with a thermal disconnection with indication of status and in some cases with one or several gas discharge tubes.

The part which serves to protect against extended over-voltages, has a power supply unit, a control unit and a power unit.

The power supply unit provides the control unit with two stabilized voltages, a negative (- Vcc) and a positive voltage (+Vcc) which is doubly stabilized whereby it has a low thermal drift, this positive voltage is used simultaneously for feeding the control unit and for obtaining two reference voltages (Vref1 and Vref2), which allows operation with very wide ranges of input voltage and ambient temperature.

Additionally in the power supply unit a direct voltage is obtained proportional to the alternating supply voltage.

The comparison is carried out in the control unit between the direct voltage proportional to the alternating voltage of the mains and the doubly stabilized reference voltage.

This control unit produces two output voltages (Vc2 and Vc3), the values of which are a function of whether the voltage proportional to the alternating voltage of the mains (Vc1) exceeds during determined times the reference voltages or not.

The value of the voltage threshold or reference voltage (Vref 1) is defined so that when the mains voltage or supply voltage exceeds its nominal voltage by at least 15% for a predetermined time (tmax 1), the disconnection of the cut-out element is produced.

The value of 15% has been chosen so as not to be influenced by slow variations in voltage that usually reach 10%.

The predetermined time in this case (tmax 1) is preferably within the range of 2 to 3 seconds, it being possible to vary if considered necessary for a certain application.

In the event of the supply voltage substantially exceeding 15% of the nominal value, it is convenient that the disconnection of the cut-out element be faster to prevent damage to the installation or equipment connected to it.

In this case the value of the voltage threshold or reference voltage 2 (Vref 2) is defined, so that when the mains voltage or supply voltage exceeds 30% of the nominal voltage during a predetermined time (tmax2) less than (tmax1), the disconnection of the cut-out element is produced. The predetermined time (tmax2) will be preferably within the range of 0.5 to 1 seconds, it being possible to vary if it is considered necessary for a certain application.

If it were necessary, more reference voltages and timeouts can be obtained.

With the object of providing the combined protection device object of the invention with greater immunity against interference, in addition to having the timeouts explained above, the comparators which the device has include a hysteresis voltage margin so that the supply voltage for which the disconnection is made is more than the reconnection voltage.

In the control unit, the output of the timer, or delay element, governs two astable multivibrators which generate a series of periodic pulses.

At the output of the astable multivibrators there are some adapter circuits or drivers which adapt their output signals to the voltage and current levels necessary to supply the actuation means in the power unit, producing at the output of this unit a periodic pulse train (Voff and Von) sufficient to achieve the actuation of the remote control unit, that is the disconnection or reconnection of the cut-out element.

The actuation means in the power unit can be, for example, triacs, MOSFETs, bipolar transistors or relays.

The operating sequence is such that when there is an extended over-voltage with voltages above nominal in the predetermined values and times, a periodic signal is generated (Voff), (Von) becoming zero, which causes the disconnection of the cut-out element, when the supply voltage falls to normal values another periodic signal (Von) is generated, (Voff) becoming zero, which causes the reconnection of the cut-out element.

The use of a series of periodic pulses for the (Von) and (Voff) signals offers the advantage that although the device can be affected by some disturbance which causes an improper connection or disconnection of the cut-out element, after a certain time (T1) or (T2) the cut-out element switches back to the correct situation. Preferred values of (T1) and (T2) can be in the range of 1 to 5 seconds, it being possible to use the same value for (T1) and (T2) if it is considered convenient.

The particular means of switching employed in the power unit, such as triacs, MOSFETs, relays, transistors, and the driver circuits associated with the control unit, have to be apprpriate for the remote control unit used.

### EXPLANATION OF THE DRAWINGS

To complete the description that will be made below and with the object of assisting in a better understanding of its characteristics, the present descriptive specification is accompanied by a set of drawings in the figures of which, by way of illustration and not restrictively, the most significant details in the invention are represented.

Figure 1 shows a schematic representation for a single-phase circuit of the location of the combined protection device and its association with the remote control unit and with the cut-out device.

Figure 2 is the same as the previous representation but for a three-phase circuit.

Figure 3 shows the connection of the combined protection device of electrical protection for a single-phase distribution and in a simplified manner it represents the elements which form the combined protection device object of the invention.

Figure 4, as above for a three-phase distribution.

Figures 5 and 6 show alternative embodiments of the protection against transient over-voltages in single-phase systems.

Figures 7 and 8 show alternative embodiments of the protection against transient over-voltages in three-phase systems respectively.

Figure 9 is a representation in simplified form of the elements which form the part for protection against extended over-voltages object of the invention.

Figure 10, shows the circuitry of the power supply unit.

Figure 11 shows the elements which form the control unit of the protection against extended over-voltages.

Figure 12 shows the elements which form the power unit of the protection against extended over-voltages.

Figure 13 shows the elements which form the driver circuits.

### PREFERRED EMBODIMENT OF THE INVENTION

In the light of the aforesaid figures, a description is provided below of a preferred embodiment of the invention together with the explanation of the drawings.

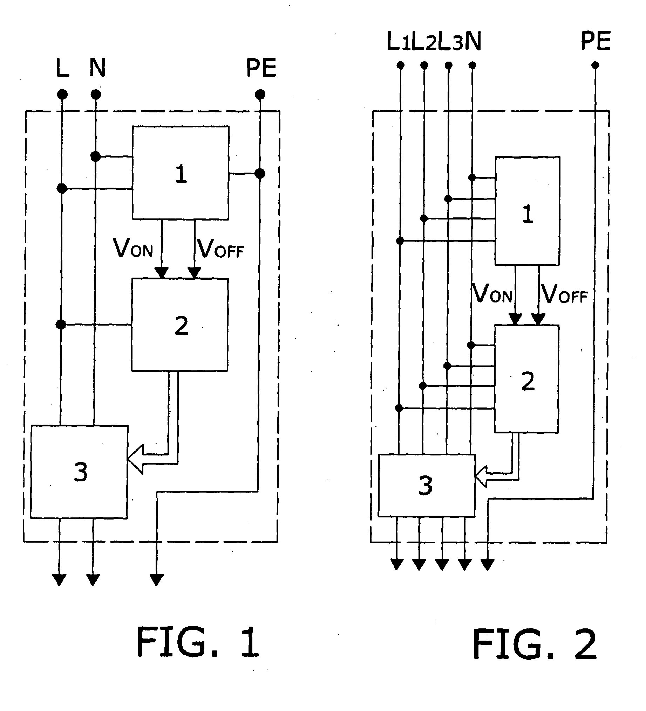

The combined device for electric protection (1) against transient and extended over-voltages with automatic reconnection object of the invention is installed in association with a remote control unit (2) which controls the actuation of said remote control unit (2) on the cut-out element (3), as can be observed in figure 1.

The combined protection device (1) delivers two voltage signals (Von) and (Voff) to the remote control unit (2) which serves to act on the cut-out element. When the supply voltage is above a maximum value during a maximum time, both previously pre-established, the appropriate signals are generated which, applied to the remote control unit (2), produce the tripping of the cut-out unit (3) protecting the loads and the installation fitted downstream. When the voltage has diminished to its normal values, the combined protection circuit (1) modifies the control signals so that the cut-out element is reconnected, re-establishing the voltage in the feed circuit.

In figure 2, the same configuration is observed as in figure 1, except that the device is employed in a three-phase network, the operating principle being exactly the same.

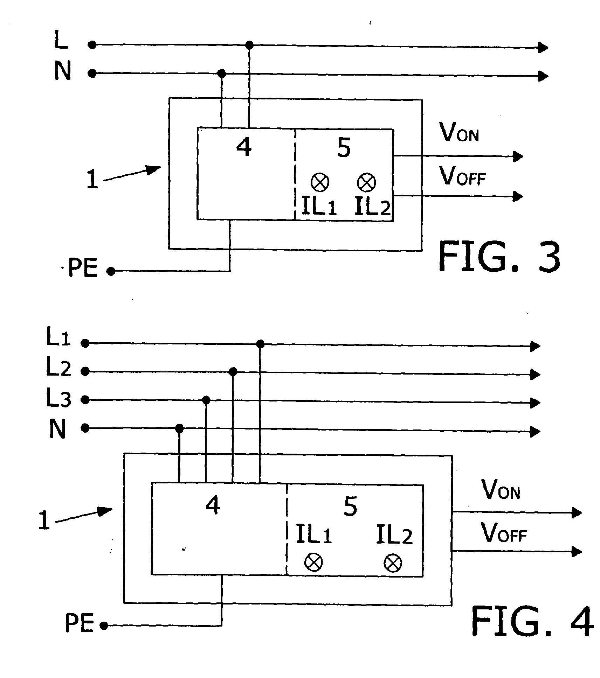

In figure 3, the connection is shown in detail of the combined protection device (1) which receives the signal tapped from the phase voltage and the neutral as well as being connected to the protection conductor. The combined protection device (1) comprises a part (4) serving to protect against transient over-voltages, and of a part (5) or circuitry serving to protect against extended over-voltages. The circuit (5) for protection against extended over-voltages comes with two pilot lamps, the lamp (IL1) indicates the presence of over-voltage in the supply voltage, the lamp (IL2) indicates a correct supply voltage.

Both parts are joined and mounted adjacent to each other in a single encapsulation with the ensuing saving in space and elements necessary to carry out the combined protection.

In figure 4, the same detail is observed as in the previous figure, but in this case the connection has been made in a three-phase network.

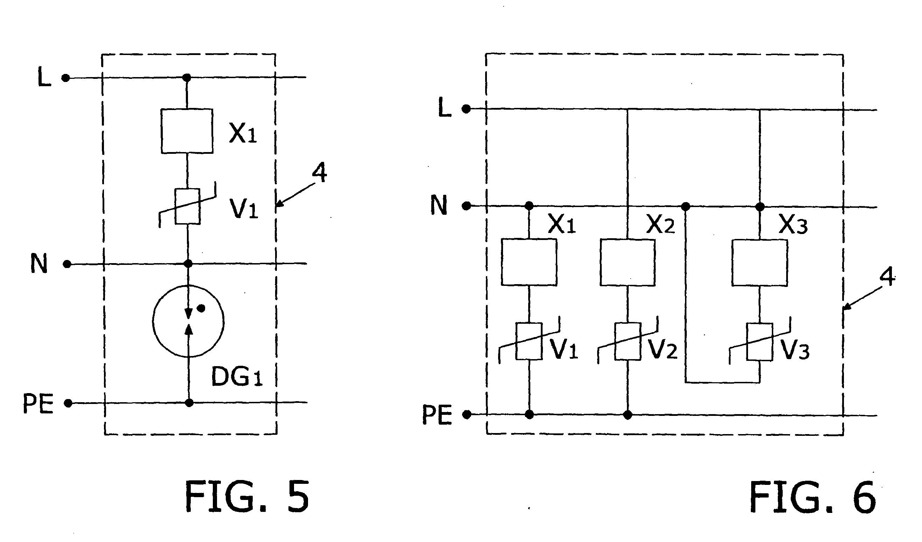

In figure 5, a possible alternative is shown for the parts that form the circuit (4) for protection against transient over-voltages, in the single-phase case it is formed by a thermal disconnection unit (X1) with status indication connected to a varistor (V1) after which it is connected to a gas discharge tube (DG1), alternatively this gas discharge tube can be replaced by a varistor and a thermal disconnection unit. This circuit (4) protects against over-voltages with a very high value of the order of kV and a very short duration. This circuit (4) protects not only the installation and loads connected downstream but also the circuit (5) for protection against extended over-voltages.

In figure 6 other alternatives are shown for protection against transient over-voltages in the single-phase case, wherein a protection has been placed between phase and earth, between neutral and earth and between phase and neutral, this last one being optional.

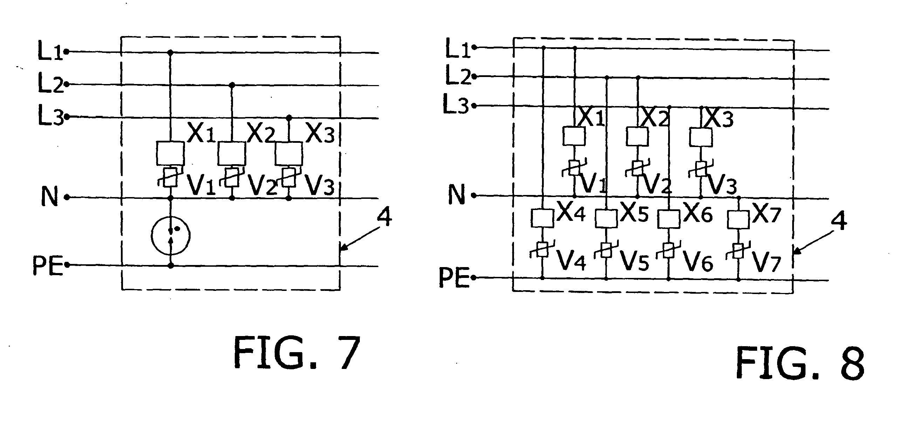

In figures 7 and 8, equivalent forms of embodiment are shown for the three-phase case. In figure 7 in each of the phases there is protection against transient over-voltages with respect to the protection conductor, having a single common gas discharge tube for the three phases. In figure 8 for each of the phases the combination has been mounted of a thermal disconnect unit associated with a varistor both between the phase and the neutral conductor and between the phase and the protection conductor, there being additionally a thermal disconnection unit assembly associated with a varistor between the neutral and the protection conductor.

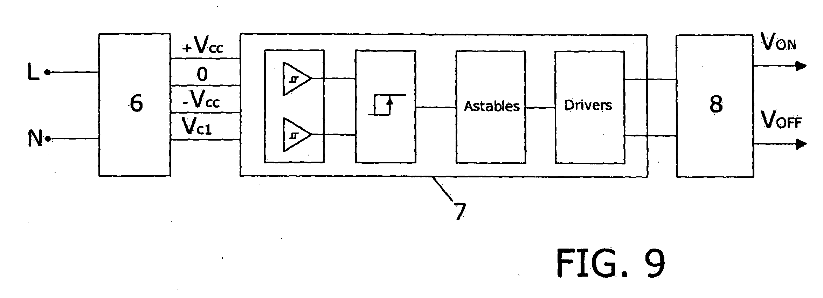

In figure 9, the circuit (5) of protection against extended over-voltages is seen, formed by:
- A power supply unit (6)
- A control unit (7)
- A power unit (8).

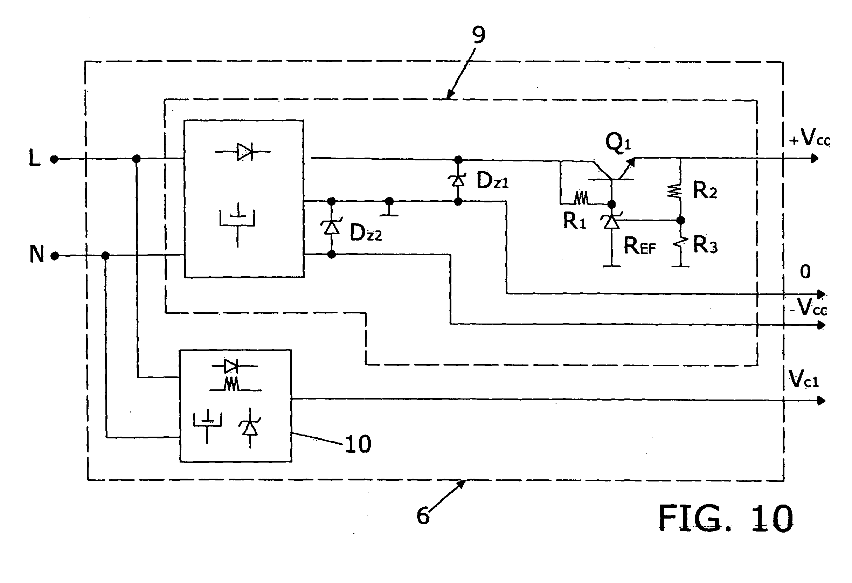

Where the power supply unit (6) (figure 10) is in turn formed by a stabilized supply source (9) serving to deliver a doubly stabilized positive voltage (+Vcc) and a stabilized negative voltage (-Vcc), it is also formed by a circuit (10) for obtaining a direct voltage (Vc1) proportional to the alternating supply voltage.

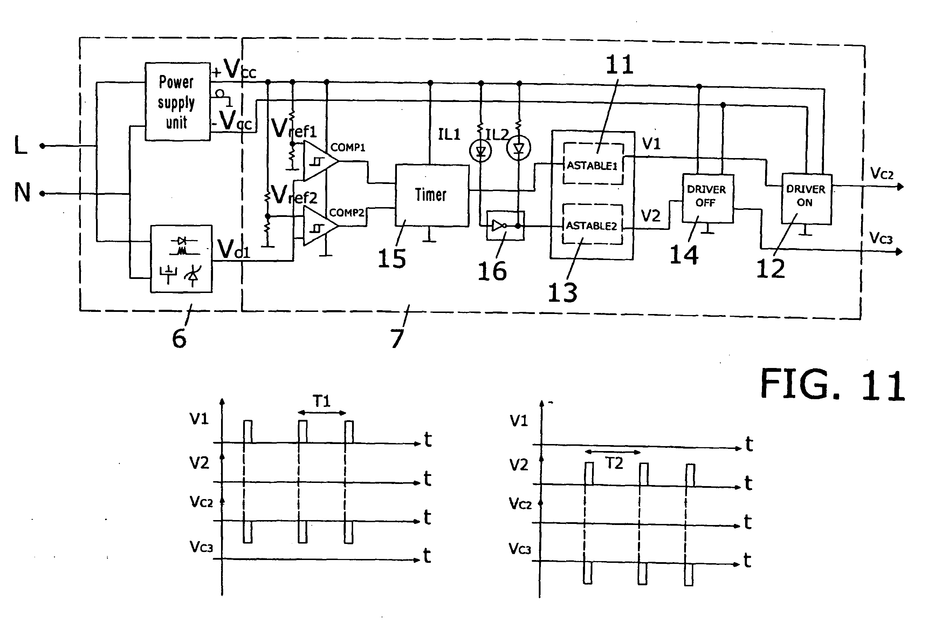

The power supply unit (6) applies the signals (+Vcc) (- Vcc) and (Vc1) to the control unit (figure 11) and serves for carrying out the comparison between the signal (Vc1), proportional to the supply voltage, and two reference voltages (Vref1) and (Vref2) obtained from the doubly stabilized voltage (+Vcc).

When the voltage (Vc1) surpasses the value of (Vref1) during a maximum pre-established time (tmax1) or when the voltage (Vc1) surpasses the value of (Vref2) during a pre-established time (tmax2), two periodic signals are generated (Vc2) and (Vc3) which are applied to the power unit (8) when they have been adapted by some driver circuits appropriate for tripping the switching means utilized, finally this stage delivers the (Von) and (Voff) signals to the remote control unit (2) which serves to produce the disconnection and reconnection of the cut-out element.

In figure 10, the characteristics are observed in detail of the power supply unit (6) which is formed by:
- A circuit (9) which supplies the negative voltage (-Vcc) stabilized by means of the zener diode (DZ2), this voltage is used exclusively for feeding the drivers (12) and (14) (figure 11) and it is not necessary to employ a second stabilization. The circuit (9) also supplies the doubly stabilized voltage (+Vcc), the first stabilization is carried out by means of the zener diode (DZ1), the second stabilization, which provides a low thermal drift is carried out by means of the transistor (Q1), the resistors (R1), (R2), (R3) and a precision stabilization device (REF). The use of this double stabilization guarantees a very high stability of the voltages (+Vcc), (Vref1) and (Vref2) with respect to the variations in the supply voltage and in the temperature, in this manner it is achieved that the supply voltage values for which it is disconnected or the cut-out device is reconnected are very stable.
- A circuit (10) which provides a direct voltage (Vc1), proportional to the alternating supply voltage.

In figure 11, it is seen that the control unit (7) of the protection circuit against extended over-voltages (5) receives the (+Vcc) and (Vc1) signals; from the doubly stabilized voltage (+Vcc), two reference voltages are obtained (Vref1) and (Vref2), the signal (Vc1) is compared with the voltage (Vref1) by means of the comparator (COMP1), and with the voltage (Vref2) by means of the comparator (COMP2). The output voltages of these comparators are taken to a variable timer used as delay element (15).

The output voltage level and delay time of the timer will depend on whether the voltage (Vc1) is less than (Vref1) and (Vref2), or if it is above voltage (Vref1) for a time greater than (tmax1), or if the voltage (Vc1) is above the voltage (Vref2) for a time greater than (tmax2), where (tmax1 > tmax2).

The signals (Vc2) and (Vc3) will be such that when processed by the power unit (8) and applied to the remote control unit (2) it acts on the cut-out element (3) disconnecting it or producing its reconnection.

When the voltage (Vc1) surpasses the voltage (Vref 1) during a predetermined time (tmax1) or (Vc1) surpasses the voltage (Vref2) during a predetermined time (tmax2), the signals (Vc2) and (Vc3) will be such that, through the power unit and the remote control unit (2) they will produce the disconnection of the cut-out element (3). When the supply voltage and therefore the voltage (Vc1) return to their normal values, the reconnection of the cut-out element (3) takes place automatically.

The value of the reference voltage (Vref1) is defined so that when the supply voltage surpasses the nominal voltage by at least 15%, the disconnection of the cut-out element (3) is produced, when it is exceeded for at least a maximum predetermined time (tmax1), preferably in the range from 2 to 3 seconds.

The value of 15%, has been taken considering that there are slow variations in voltage which can reach 10% and for which the tripping of the protection circuit is not desired.

The value of the reference voltage (Vref2) defined so that when the supply voltage surpasses the nominal voltage by at least 30%, the disconnection of the cut-out element (3) is produced, when it is exceeded for at least a maximum predetermined time (tmax2), preferably in the range from 0.5 to 1 seconds.

The comparators (COMP1) and (COMP2) have a hysteresis voltage margin, so that the supply voltage for which the disconnection is made is above the reconnection voltage. Through this hysteresis voltage it is managed to provide a high immunity of the device to disturbances which could produce undesired disconnection or connection.

The hysteresis voltage margin together with the aforementioned timeout, allow the device to include high immunity to slow disturbances of the supply voltage, preventing repeated connections or disconnections from possibly damaging the installation or the connected loads.

The hysteresis voltage margin depends largely on the doubly stabilized voltage (+Vcc) for which reason it is kept very stable in its value and is very little affected by the variations in the supply voltage and temperature.

The values of the hysteresis voltage margin can be between 5 and 10 V, others being possible depending on the conditions of the application.

The output of the variable timer (15) is taken directly to the astable multivibrator (ASTABLE 1)(11), and through an inverter element (16) to the astable multivibrator (ASTABLE 2)(13), this signal coming from the timer (15) controls the operation of the multivibrators so that when the supply voltage surpasses its nominal value by at least 15% for a predetermined time above (tmax1) on one hand the astable multivibrator (ASTABLE 1)(11) is disabled, the signals (V1), (Vc2) and (Von) being zero and on the other hand the astable multivibrator (ASTABLE 2) is enabled the output (V2) of which will be a positive pulse train which is applied to the driver circuit (DRIVER OFF) (14) which adapts the levels of the signal (V2) to obtain a signal (Vc3) suitable for controlling the switching means (17) in the power unit (8). The power unit (8) will deliver a periodic signal (Voff) which will be a pulse train to the remote control unit. The remote control unit on receiving the input signal Voff produces the disconnection of the cut-out element.

Since the signal (Voff) applied to the remote control unit (2) is periodic, the connection and disconnection of the cut-out unit does not take place in a continuous fashion, but rather is a manner of confirming the actuation which the remote control unit has to carry out on the cut-out unit disconnecting it or reconnecting it.

In the event that the input voltage surpasses its nominal value by at least 30% during a predetermined time above (tmax2), the operation is the same but the time of actuation decreases.

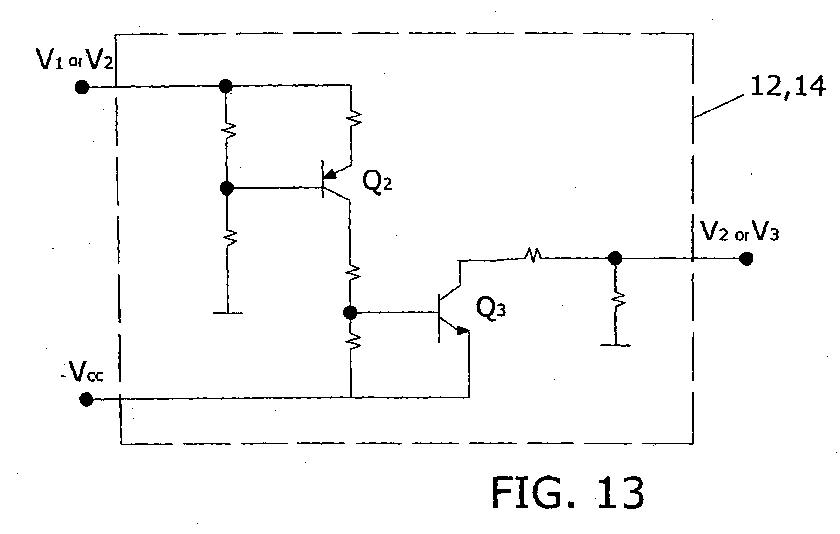

In the case of using triacs as switching means (17) it is convenient that the driver circuits (12) and (14) convert the positive voltage pulses to negative for a better operation, a practical embodiment of these drivers can be seen in figure 13.

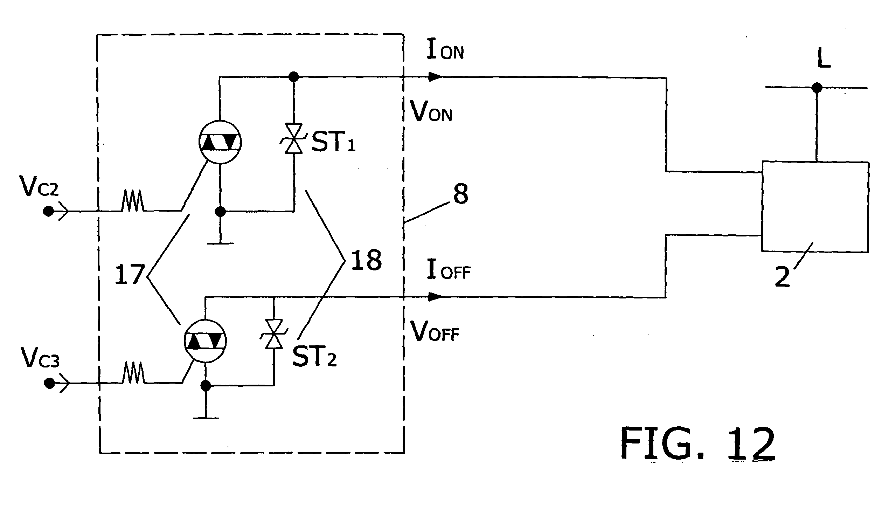

In figure 12, the representation is shown of a possible embodiment of a power unit (8) where in parallel with the switching means (17) some arrestor diodes (18) have been mounted which absorb residual peaks of the varistors. Despite triacs being shown as the switching means (17), MOSFETs, transistors, relays, etc. can be used, as has already been mentioned.

When the input voltage descends to its normal values the value of the output voltage changes, causing the disabling of the (ASTABLE 2), the signals (V2), (Vc3) and (Voff) become zero and simultaneously the (ASTABLE 1)(11) is enabled whereby a sequence of positive pulses is obtained (ASTABLE 1) the output (V1) of which will be a sequence of positive pulses which are applied to the driver circuit (DRIVER ON) (12) which adapts the levels of the signal (V1) to obtain a signal (Vc2) suitable for controlling the switching means (17) in the power unit. The power unit will supply the remote control unit with a signal (Von) which will be a pulse train with the appropriate polarity for the latter to cause the reconnection of the cut-out element.

Using periodic pulse trains as actuation signals has the great advantage that, even though the device is affected by some disturbance which causes an improper connection or reconnection of the cut-out element, after a time (T1) or (T2) at most it will return to the correct situation. By using independent astable multivibrators, different repetition periods (T1) and (T2) can be used for the pulses if it is considered necessary; preferred values of (T1) and (T2) can be in the range from 1 to 5 seconds, it being possible to use others if it is considered necessary for a determined application.

Part or all of the elements which form the control unit (7) can be integrated in a microcontroller, and perform the same functions identically.

It is not considered necessary to extend this description further for any expert in the matter to comprehend the scope of the invention and the advantages that arise from the same.

The materials, form, size and arrangement of the elements are capable of variation provided they do not alter the essential nature of the invention.

The terms in which this specification has been written are always to be taken in the broadest sense and not restrictively.

## Claims

1. Combined device for electric protection at low voltage against transient and extended over-voltages with automatic reconnection of application in the individual point of supply and which is connected to a remote control unit (2) and to a cut-out element (3), the device being formed by the association of a circuit (4) of protection against transient over-voltages and by a circuit (5) against extended over-voltages, and both mounted so that they form a single assembly wherein the circuit (5) of protection against extended over-voltages is formed by:
- A power supply unit (6)
- A control unit (7)
- A power unit (8).
Where:
- The circuit (5) of protection against extended over-voltages acts so that when the supply voltage surpasses a threshold value lasting a maximum time it generates signals which when applied to the remote control unit (2) produce the tripping of the cut-out unit (3), and when the supply voltage returns to its normal values it generates other values of the signals which are applied to the remote control unit and which produce the reconnection of the cut-out unit (3),
**characterized in that**
- The power supply unit (6) is in turn formed by a stabilized voltage source (9) serving to supply a doubly stabilized positive voltage (+Vcc) and a stabilized negative voltage (-Vcc), it is also formed by a circuit (10) for obtaining a direct voltage (Vc1) proportional to the alternating supply voltage. The positive voltage (+Vcc) is used simultaneously for feeding the control unit and for obtaining two reference voltages (Vref1 and Vref2), wherein,
the stabilized voltage source (9) provides the stabilized negative voltage (-Vcc) by means of a zener diode (DZ2), this voltage is used exclusively for feeding some drivers (12) and (14), furthermore, the circuit (9) also provides the doubly stabilized voltage (+Vcc), where the first stabilization is carried out by means of a zener diode (DZ1), whilst the second stabilization, which provides a low thermal drift, is implemented by means of the transistor (Q1), the resistors (R1), (R2), (R3) and a precision stabilization device (REF); the use of this double stabilization guarantees a very high stability of the voltages (+Vcc), (Vref1) and (Vref2) with respect to variations in the supply voltage and in the temperature.
- The control unit (7) generates a series of pulses, as a function of the comparison carried out between the one voltage (+Vcc) proportional to the input voltage and the reference voltages (Vref1) and (Vref2) in some comparators (COMP1) and (COMP2) incorporating a hysteresis voltage margin; the pulses generated are applied successively to a switching element of the power unit (8) which produces the actuation of the remote control unit (2) both for the disconnection and for the reconnection of the cut-out element.

2. Combined device of electric protection at low voltage against transient and extended over-voltages with automatic reconnection according to claim 1, **characterized in that** the control unit (7) receives the signals (+Vcc) (-Vcc) and (Vc1) from the power supply unit (6), and delivers the signals (Vc2) and (Vc3) to the power unit, the control unit (7) being formed by:
- Comparators (COMP1) and (COMP2) the outputs of which are taken to
- A variable timer used as delay, with its output connected to,
- One (ASTABLE 1)(11) and to another astable multivibrator (ASTABLE 2)(13), the latter through an inverter (16).
- Drivers, (DRIVER ON) (12) and (DRIVER OFF) (14) connected to the output of the (ASTABLE 1) and (ASTABLE 2) respectively.

3. Combined device of electric protection at low voltage against transient and extended over-voltages with automatic reconnection according to claim 2, **characterized in that** in (COMP1) and in (COMP2) the comparison is carried out between the signal (Vc1), proportional to the supply voltage and the signals (Vref 1) and (Vref2) respectively.

4. Combined device of electric protection at low voltage against transient and extended over-voltages with automatic reconnection according to claim 2, **characterized in that** the control unit (7) generates some periodic signals (Vc2) and (Vc3) when the voltage (Vc1) surpasses the value (Vref1) for a pre-established maximum time (tmax1) or when the voltage (Vc1) surpasses the value (Vref2) for another pre-established maximum time (tmax2).

5. Combined device of electric protection at low voltage against transient and extended over-voltages with automatic reconnection according to claim 4, **characterized in that** the reference voltage (Vref1) will be at least 15% above the nominal voltage and the maximum time (tmax1) set preferably in the range from 2 to 3 seconds.

6. Combined device of electric protection at low voltage against transient and extended over-voltages with automatic reconnection according to claim 4, **characterized in that** the reference voltage (Vref2) it will be at least 30% above the nominal voltage and the maximum time (tmax1) set preferably in the range from 0.5 to 1 seconds.

7. Combined device of electric protection at low voltage against transient and extended over-voltages with automatic reconnection according to claim 4, **characterized in that** when the supply voltage surpasses its nominal value by at least 15% during a predetermined time greater than (tmax1) on one hand the astable multivibrator (ASTABLE 1)(11) is disabled, the signals (V1), (Vc2) and (Von) are zero and on the other hand the astable multivibrator (ASTABLE 2) is enabled the output (V2) of which will be a sequence of positive pulses which are applied to the driver circuit (DRIVER OFF) (14) which adapts the levels of the signal (V2) to obtain a signal (Vc3) suitable to control some switching means (17) in the power unit (8). The power unit (8) applies a signal (Voff) with the appropriate polarity to the remote control unit so that this produces the disconnection of the cut-out element.

8. Combined device of electric protection at low voltage against transient and extended over-voltages with automatic reconnection according to claim 4, **characterized in that** when the input voltage surpasses its nominal value by at least 30% during a predetermined time greater than (tmax2), the operation is the same but the actuation time is reduced.

9. Combined device of electric protection at low voltage against transient and extended over-voltages with automatic reconnection according to claim 7 or 8 or 9, **characterized in that** when the input voltage falls to its normal values the value of the output voltage changes, causing the disabling of the (ASTABLE 2), the signals (V2), (Vc3) and (Voff) become zero and simultaneously the (ASTABLE 1)(11) is enabled whereby there is a sequence of positive pulses (ASTABLE 1) the output (V1) of which will be a sequence of positive pulses which are applied to the driver circuit (DRIVER ON) (12) which adapts the levels of the signal (V1) to obtain a signal (Vc2) suitable to control the switching means (17) in the power unit. The power unit will deliver a signal (Von) which will be a pulse train with the appropriate polarity to the remote control unit so that this produces the reconnection of the cut-out element.

10. Combined device of electric protection at low voltage against transient and extended over-voltages with automatic reconnection according to claim 9, **characterized in that** in parallel with the means of switching of the power unit some diodes are mounted which clip the residual voltage peaks of the varistors.

11. Combined device of electric protection at low voltage against transient and extended over-voltages with automatic reconnection according to any one of the previous claims **characterized in that** it is used both in single-phase and three-phase supplies.

12. Combined device of electric protection at low voltage against transient and extended over-voltages with automatic reconnection according to any one of the previous claims **characterized in that** the comparators (COMP1) and (COMP2) have a hysteresis voltage margin in which the supply voltage for which the disconnection is made is above the reconnection voltage, providing the device together with the delay with a high immunity to slow fluctuations in the supply voltage.

## Patentansprüche

1. Kombinierte Vorrichtung für den elektrischen Schutz bei Niederspannung gegen vorübergehende und längere Überspannungen mit einem automatischen Wiederanschluss der Anwendung an den individuellen Versorgungspunkt, und die an einen ferngesteuerten Steuerkreis (2) und an ein Abschaltelement (3) angeschlossen ist, wobei die Vorrichtungen durch die Verbindung eines Kreislaufs (4) zum Schutz gegen vorübergehende Überspannungen und durch einen Kreislauf (5) gegen längere Überspannungen gebildet wird, wobei beide so montiert werden, dass sie eine einzige Baugruppe bilden, bei der der Kreislauf (5) zum Schutz vor längeren Überspannungen durch Folgendes gebildet wird:
- Eine Stromversorgungseinheit (6)
- Eine Steuereinheit (7)
- Eine Leistungseinheit (8)
Wobei:
- Der Kreislauf (5) zum Schutz gegen längere Überspannungen so arbeitet, dass, wenn die Versorgungsspannung einen eine maximale Zeitspanne andauernden Schwellwert überschreitet, dieser ein Signal erzeugt, das bei Anwendung auf die ferngesteuerte Steuereinheit (2) die Auslösung der Abschalteinheit (3) erzeugt, und wenn die Versorgungsspannung wieder auf ihren normalen Wert zurückkehrt, dieser andere Signalwerte erzeugt, die auf die ferngesteuerte Steuereinheit angewendet werden und die den Wiederanschluss der Abschalteinheit (3) erzeugen,
**dadurch gekennzeichnet, dass**
- Die Stromversorgungseinheit (6) ihrerseits durch eine stabilisierte Spannungsquelle (9) gebildet wird, die dazu dient, eine doppelt stabilisierte positive Spannung (+Vcc) und eine stabilisierte negative Spannung (-Vcc) zu liefern, wobei diese weiterhin durch einen Kreislauf (10) zur Erhaltung einer direkten Spannung (Vc1) gebildet wird, die proportional zu der Wechselversorgungsspannung ist. Die positive Spannung (+Vcc) wird gleichzeitig zur Versorgung der Steuereinheit und zur Erhaltung zweier Referenzspannungen (Vref1 und Vref2) verwendet, wobei,
die stabilisierte Spannungsquelle (9) die stabilisierte negative Spannung (-Vcc) mittels einer Zener-Diode (DZ2) erzeugt, diese Spannung wird ausschließlich zur Versorgung einiger Treiber (12) und (14) verwendet, wobei der Kreislauf (9) darüber hinaus ebenfalls die doppelt stabilisierte Spannung (+Vcc) zur Verfügung stellt, wobei die erste Stabilisierung mittels einer Zener-Diode (DZ1) durchgeführt wird, während die zweite Stabilisierung, die einen niedrigen Wärmedrift erzeugt, mit einem Transistor (Q1), den Widerständen (R1), (R2), (R3) und einer Vorrichtung zur Genauigkeitsstabilisierung (REF) durchgeführt wird; wobei die Verwendung dieser doppelten Stabilisierung eine sehr hohe Stabilität der Spannungen (+Vcc), (Vref1) und (Vref2) gegenüber den Schwankungen der Versorgungsspannung und der Temperatur garantiert.
- Die Steuereinheit (7) eine Reihe von Impulsen als Funktion des Vergleichs erzeugt, der zwischen der einen, gegenüber der Eingangsspannung proportionalen Spannung (+Vcc), und den Referenzspannungen (Vref1) und (Vref2) in einigen Komparatoren (COMP1) und (COMP2) durchgeführt wird, die eine Toleranz der Hysteresespannung einschließen; wobei die erzeugten Impulse nacheinander auf ein Schaltelement der Leistungseinheit (8) angewendet werden, das die Betätigung der ferngesteuerten Steuereinheit (2) sowohl bei der Trennung als auch bei dem Neuanschluss des Abschaltelements erzeugt.

2. Kombinierte Vorrichtung für den elektrischen Schutz bei Niederspannung gegen vorübergehende und längere Überspannungen mit einem automatischen Wiederanschluss nach Anspruch 1, **dadurch gekennzeichnet, dass** die Steuereinheit (7) die Signale (+Vcc) (-Vcc) und (Vc1) von der Stromversorgungseinheit (6) erhält, welche die Signale (Vc2) und (Vc3) an die Leistungseinheit liefert, wobei die Steuereinheit (7) durch Folgendes gebildet wird:
- Komparatoren (COMP1) und (COMP2), deren Ausgänge an
- Einen variablen Zeitgeber zur Verzögerung geführt werden, dessen Ausgang an
- Eine (INSTABIL 1) (11) und eine weitere instabile Kippstufe (INSTABIL 2) (13) angeschlossen wird, die Letztere über einen Inverter (16).
- Treiber (TREIBER EIN) (12) und (TREIBER AUS) (14), welche jeweils an den Ausgang von (INSTABIL 1) bzw. (INSTABIL 2) angeschlossen sind.

3. Kombinierte Vorrichtung für den elektrischen Schutz bei Niederspannung gegen vorübergehende und längere Überspannungen mit einem automatischen Wiederanschluss nach Anspruch 2, **dadurch gekennzeichnet, dass** bei (COMP1) und (COMP2) der Vergleich zwischen dem gegenüber der Versorgungsspannung proportionalen Signal (Vc1) und den Signalen (Vref1) bzw. (Vref2) durchgeführt wird.

4. Kombinierte Vorrichtung für den elektrischen Schutz bei Niederspannung gegen vorübergehende und längere Überspannungen mit einem automatischen Wiederanschluss nach Anspruch 2, **dadurch gekennzeichnet, dass** die Steuereinheit (7) einige periodische Signale (Vc2) und (Vc3) erzeugt, wenn die Spannung (Vc1) den Wert (Vref1) während einer vorher festgelegten maximalen Zeitspanne (tmax1) überschreitet, oder wenn die Spannung (Vc1) den Wert (Vref2) während einer anderen, vorher festgelegten maximalen Zeitspanne (tmax2) überschreitet.

5. Kombinierte Vorrichtung für den elektrischen Schutz bei Niederspannung gegen vorübergehende und längere Überspannungen mit einem automatischen Wiederanschluss nach Anspruch 4, **dadurch gekennzeichnet, dass** die Referenzspannung (Vref1) mindestens 15% über der Nennspannung liegt und die maximale Zeitspanne (tmax1) vorzugsweise auf den Bereich von 2 bis 3 Sekunden eingestellt ist.

6. Kombinierte Vorrichtung für den elektrischen Schutz bei Niederspannung gegen vorübergehende und längere Überspannungen mit einem automatischen Wiederanschluss nach Anspruch 4, **dadurch gekennzeichnet, dass** die Referenzspannung (Vref2) mindestens 30% über der Nennspannung liegt und die maximale Zeitspanne (tmax1) vorzugsweise auf den Bereich von 0,5 bis 1 Sekunde eingestellt ist.

7. Kombinierte Vorrichtung für den elektrischen Schutz bei Niederspannung gegen vorübergehende und längere Überspannungen mit einem automatischen Wiederanschluss nach Anspruch 4, **dadurch gekennzeichnet, dass**, wenn die Versorgungsspannung deren Nennwert um mindestens 15% während einer vorher festgelegten Zeitspanne größer als (tmax1) überschreitet, die instabile Kippstufe (INSTABIL 1) (11) auf der einen Seite gesperrt wird, die Signale (V1), (Vc2) und Vein) Null sind, und auf der anderen Seite die instabile Kippstufe (INSTABIL 2) freigeschaltet wird, deren Ausgabe (V2) eine Reihenfolge von positiven Impulsen sein wird, die auf den Treiberkreislauf (TREIBER AUS) (14) angewendet werden, der die Pegel des Signals (V2) anpasst, um ein Signal (Vc3) zu erhalten, das zur Steuerung einiger der Schaltmittel (17) in der Leistungseinheit (8) geeignet ist. Die Leistungseinheit (8) wendet ein Signal (Vaus) mit der geeigneten Polarität auf die ferngesteuerte Steuereinheit an, so dass **dadurch** die Trennung des Abschaltelements erzeugt wird.

8. Kombinierte Vorrichtung für den elektrischen Schutz bei Niederspannung gegen vorübergehende und längere Überspannungen mit einem automatischen Wiederanschluss nach Anspruch 4, **dadurch gekennzeichnet, dass**, wenn die Eingangsspannung deren Nennwert um mindestens 30% während einer vorher festgelegten Zeitspanne größer als (tmax2) überschreitet, die Arbeitsschritte dieselben sind, die Betätigungszeitspanne jedoch reduziert wird.

9. Kombinierte Vorrichtung für den elektrischen Schutz bei Niederspannung gegen vorübergehende und längere Überspannungen mit einem automatischen Wiederanschluss nach Anspruch 7 oder 8 oder 9, **dadurch gekennzeichnet, dass**, wenn die Eingangsspannung auf ihren Nennwert absinkt, sich der Wert der Ausgangsspannung ändert, wodurch die Sperrung der (INSTABIL 2) erzeugt wird, die Signale (V2), (Vc3) und (Vaus) Null werden und gleichzeitig die (INSTABIL 1) (11) freigeschaltet wird, wodurch eine Reihe von positiven Impulsen (INSTABIL 1) entsteht, deren Ausgang (V1) eine Reihenfolge von positiven Impulsen sein wird, die auf den Treiberkreislauf (TREIBER EIN) (12) angewendet werden, der die Pegel des Signals (V1) anpasst, um ein Signal (Vc2) zu erhalten, das zur Steuerung der Schaltmittel (17) in der Leistungseinheit geeignet ist. Die Leistungseinheit liefert ein Signal (Vein) an die ferngesteuerte Steuereinheit, bei dem es sich um eine Impulsfolge mit der geeigneten Polarität handelt, so dass **dadurch** der Wiederanschluss des Abschaltelements erzeugt wird.

10. Kombinierte Vorrichtung für den elektrischen Schutz bei Niederspannung gegen vorübergehende und längere Überspannungen mit einem automatischen Wiederanschluss nach Anspruch 9, **dadurch gekennzeichnet, dass** parallel zu den Schaltmitteln der Leistungseinheit einige Dioden montiert sind, welche die Restspannungsspitzen der Varistoren abtrennen.

11. Kombinierte Vorrichtung für den elektrischen Schutz bei Niederspannung gegen vorübergehende und längere Überspannungen mit einem automatischen Wiederanschluss nach irgendeinem der vorherigen Ansprüche, **dadurch gekennzeichnet, dass** diese sowohl bei einphasigen als auch dreiphasigen Versorgungen verwendet wird.

12. Kombinierte Vorrichtung für den elektrischen Schutz bei Niederspannung gegen vorübergehende und längere Überspannungen mit einem automatischen Wiederanschluss nach irgendeinem der vorherigen Ansprüche, **dadurch gekennzeichnet, dass** die Komparatoren (COMP1) und (COMP2) eine Toleranz der Hysteresespannung besitzen, bei der die Versorgungsspannung, für die die Trennung erfolgt, über der Wiederanschlussspannung liegt, wodurch die Vorrichtung zusammen mit der Verzögerung mit einer hohen Störfestigkeit gegenüber langsamen Schwankungen der Versorgungsspannung ausgestattet wird.

## Revendications

1. Dispositif combiné pour protection électrique à basse tension contre des surtensions transitoires et prolongées avec reconnexion automatique de l'application dans le point d'alimentation individuel et qui est connecté à une unité de commande à distance (2) et à un élément de coupe-circuit (3), le dispositif étant formé par l'association d'un circuit (4) de protection contre des surtensions transitoires et par un circuit (5) contre des surtensions prolongées, tous deux étant montés de façon à ce qu'ils forment un unique assemblage dans lequel le circuit (5) de protection contre des surtensions prolongées est formé par :
- Un bloc d'alimentation (6)
- Une unité de commande (7)
- Un générateur (8).
Où :
- Le circuit (5) de protection contre des surtensions prolongées agit de façon à ce que, lorsque la tension d'alimentation dépasse une valeur seuil d'une durée maximale, il génère des signaux qui, lorsqu'ils sont appliqués à l'unité de commande à distance (2), provoquent le déclenchement de l'unité de coupe-circuit (3), et lorsque la tension d'alimentation revient à ses valeurs normales, il génère d'autres valeurs des signaux qui sont appliqués à l'unité de commande à distance et qui provoquent la reconnexion de l'unité de coupe-circuit (3),
**caractérisé en ce que**
- Le bloc d'alimentation (6) est à son tour formé par une source de tension stabilisée (9) servant à fournir une double tension positive stabilisée (+Vcc) et une tension négative stabilisée (-Vcc), il est également formé par un circuit (10) pour obtenir une tension continue (Vc1) proportionnelle à la tension d'alimentation alternative. La tension positive (+Vcc) est utilisée simultanément pour alimenter l'unité de commande et pour obtenir deux tensions de référence (Vréf1 et Vréf2), où,
la source de tension stabilisée (9) fournit la tension négative stabilisée (-Vcc) au moyen d'une diode Zener (DZ2), cette tension est utilisée exclusivement pour alimenter des pilotes (12) et (14), de plus, le circuit (9) fournit également la double tension stabilisée (+Vcc), où la première stabilisation est réalisée au moyen d'une diode Zener (DZ1), tandis que la seconde stabilisation, qui fournit une dérive thermique basse, est mise en oeuvre au moyen du transistor (Q1), des résistances (R1), (R2), (R3) et d'un dispositif de stabilisation de précision (REF) ; l'utilisation de cette double stabilisation garantit une très haute stabilité des tensions (+Vcc), (Vréf1) et (Vréf2) par rapport aux variations dans la tension d'alimentation et dans la température.
- L'unité de commande (7) génère une série d'impulsions, comme une fonction de la comparaison réalisée entre la seule tension (+Vcc) proportionnelle à la tension d'entrée et les tensions de référence (Vréf1) et (Vréf2) dans des comparateurs (COMP1) et (COMP2) comprenant une marge de tension hystérétique ; les impulsions générées sont appliquées successivement à un organe de commutation du générateur (8) qui provoque l'actionnement de l'unité de commande à distance (2) à la fois pour la déconnexion et pour la reconnexion de l'élément de coupe-circuit.

2. Dispositif combiné de protection électrique à basse tension contre des surtensions transitoires et prolongées avec reconnexion automatique selon la revendication 1, **caractérisé en ce que** l'unité de commande (7) reçoit les signaux (+Vcc), (-Vcc) et (Vc1) en provenance du bloc d'alimentation (6), et délivre les signaux (Vc2) et (Vc3) au générateur, l'unité de commande (7) étant formée par :
- Des comparateurs (COMP1) et (COMP2) dont les sorties sont prises à
- Un temporisateur réglable utilisé comme retard, avec sa sortie connectée à,
- Un (ASTABLE 1) (11) et à un autre multivibrateur astable (ASTABLE 2) (13), le dernier via un inverseur (16).
- Des pilotes, (PILOTE ON) (12) et (PILOTE OFF) (14) connectés à la sortie des (ASTABLE 1) et (ASTABLE 2) respectivement.

3. Dispositif combiné de protection électrique à basse tension contre des surtensions transitoires et prolongées avec reconnexion automatique selon la revendication 2, **caractérisé en ce que** dans (COMP1) et dans (COMP2) la comparaison est réalisée entre le signal (Vc1), proportionnel à la tension d'alimentation et les signaux (Vréf1) et (Vréf2) respectivement.

4. Dispositif combiné de protection électrique à basse tension contre des surtensions transitoires et prolongées avec reconnexion automatique selon la revendication 2, **caractérisé en ce que** l'unité de commande (7) génère des signaux périodiques (Vc2) et (Vc3) lorsque la tension (Vc1) dépasse la valeur (Vréf1) pendant un temps maximal prédéterminé (tmax1) ou lorsque la tension (Vc1) dépasse la valeur (Vréf2) pendant un autre temps maximal prédéterminé (tmax2).

5. Dispositif combiné de protection électrique à basse tension contre des surtensions transitoires et prolongées avec reconnexion automatique selon la revendication 4, **caractérisé en ce que** la tension de référence (Vréf1) sera au moins de 15% supérieure à la tension nominale et le temps maximal (tmax1) réglé de préférence dans la fourchette de 2 à 3 secondes.

6. Dispositif combiné de protection électrique à basse tension contre des surtensions transitoires et prolongées avec reconnexion automatique selon la revendication 4, **caractérisé en ce que** la tension de référence (Vréf2) sera au moins de 30% supérieure à la tension nominale et le temps maximal (tmax1) réglé de préférence dans la fourchette de 0,5 à 1 seconde.

7. Dispositif combiné de protection électrique à basse tension contre des surtensions transitoires et prolongées avec reconnexion automatique selon la revendication 4, **caractérisé en ce que** lorsque la tension d'alimentation dépasse sa valeur nominale d'au moins 15% durant un temps prédéterminé supérieur à (tmax1) d'une part le multivibrateur astable (ASTABLE 1) (11) est désactivé, les signaux (V1), (Vc2) et (Von) sont nuls et d'autre part le multivibrateur astable (ASTABLE 2) est activé dont la sortie (V2) sera une séquence d'impulsions positives qui sont appliquées au circuit pilote (PILOTE OFF) (14) qui adapte les niveaux du signal (V2) pour obtenir un signal (Vc3) approprié pour commander des organes de commutation (17) dans le générateur (8). Le générateur (8) applique un signal (Voff) avec la polarité appropriée à l'unité de commande à distance de façon à ce que cela provoque la déconnexion de l'élément de coupe-circuit.

8. Dispositif combiné de protection électrique à basse tension contre des surtensions transitoires et prolongées avec reconnexion automatique selon la revendication 4, **caractérisé en ce que** lorsque la tension d'entrée dépasse sa valeur nominale d'au moins 30% durant un temps prédéterminé supérieur à (tmax2), l'opération est la même mais le temps d'actionnement est réduit.

9. Dispositif combiné de protection électrique à basse tension contre des surtensions transitoires et prolongées avec reconnexion automatique selon la revendication 7 ou 8 ou 9, **caractérisé en ce que** lorsque la tension d'entrée retombe à ses valeurs normales, la valeur de la tension de sortie change, provoquant la désactivation de l'(ASTABLE 2), les signaux (V2), (Vc3) et (Voff) deviennent nuls et simultanément l'(ASTABLE 1) (11) est activé et il y a ainsi une séquence d'impulsions positives (ASTABLE 1) dont la sortie (V1) sera une séquence d'impulsions positives qui sont appliquées au circuit pilote (PILOTE ON) (12) qui adapte les niveaux du signal (V1) pour obtenir un signal (Vc2) approprié pour commander les organes de commutation (17) dans le générateur. Le générateur délivrera un signal (Von) qui sera un train d'impulsions avec la polarité appropriée à l'unité de commande à distance de façon à ce que cela provoque la reconnexion de l'élément de coupe-circuit.

10. Dispositif combiné de protection électrique à basse tension contre des surtensions transitoires et prolongées avec reconnexion automatique selon la revendication 9, **caractérisé en ce qu'**en parallèle avec les organes de commutation du générateur des diodes sont montées lesquelles écrêtent les pics de tension résiduelle des varistances.

11. Dispositif combiné de protection électrique à basse tension contre des surtensions transitoires et prolongées avec reconnexion automatique selon n'importe laquelle des revendications précédentes, **caractérisé en ce qu'**il est utilisé dans des alimentations monophasées et triphasées.

12. Dispositif combiné de protection électrique à basse tension contre des surtensions transitoires et prolongées avec reconnexion automatique selon n'importe laquelle des revendications précédentes, **caractérisé en ce que** les comparateurs (COMP1) et (COMP2) ont une marge de tension hystérétique dans laquelle la tension d'alimentation pour laquelle la déconnexion est réalisée est supérieure à la tension de reconnexion, cela conférant au dispositif conjointement avec le retard une haute immunité pour ralentir les fluctuations dans la tension d'alimentation.
